# EUROPEAN PATENT APPLICATION

(11) **EP 4 825 800 A1**
(43) Date of publication of application: **21.10.2026**
(21) Application number: 24904308.4
(22) Date of filing: 16.12.2024
(51) Int. Cl.: C01D 7/00, C01F 11/46

(54) **METHODS FOR PRODUCING GYPSUM AND SODIUM BICARBONATE WITH CONTROLLED PARTICLE SIZE USING SODIUM SULFATE AND APPARATUS FOR PRODUCING SODIUM BICARBONATE**

(30) Priority: 14.12.2023 KR 20230182476
(71) Applicant: POSCO Holdings Inc., Pohang-si, Gyeongsangbuk-do 37859 (KR); Research Institute of Industrial Science & Technology, Pohang-si, Gyeongsangbuk-do 37673 (KR)
(72) Inventor: BYUN, Young-Chul, Gwangyang-si, Jeollanam-do 57798 (KR); MIN, Jung-Gi, Pocheon-si, Gyeonggi-do 11185 (KR); KIM, Hwan-Ki, Gwangju 61135 (KR); LEE, Young-Bong, Gwangyang-si, Jeollanam-do 57809 (KR); KIM, Byung-Kee, Gwangyang-si, Jeollanam-do 57805 (KR)
(74) Representative: Pfenning, Meinig & Partner mbB
(86) International application number: PCT/KR2024/020373
(87) International publication number: WO 2025/127743

(57) **Abstract**

The present invention relates to methods for producing gypsum and sodium bicarbonate with controlled particle size using sodium sulfate, and an apparatus for producing sodium bicarbonate and, more specifically, to: a method for producing sodium bicarbonate, comprising the steps of producing a sodium sulfate solution containing sodium ions from a mixture of a leaching agent and a sodium sulfate-containing material, producing sodium bicarbonate (NaHCO₃) by adding carbon dioxide and ammonia into the sodium sulfate solution, and controlling the particle size of the sodium bicarbonate by heating the sodium bicarbonate at a temperature of 60-100°C; a method for producing gypsum by adding a calcium-containing material into the filtrate remaining after collecting the sodium bicarbonate in the step of producing the sodium bicarbonate; and a reactor for producing sodium bicarbonate, comprising a leach reactor in which a sodium aqueous solution is produced by leaching sodium ions from a sodium sulfate-containing material by using a leaching agent, a carbonation reactor in which a gas containing carbon dioxide or a carbonation solution and a gas containing ammonia or an ammonia solution are supplied to the sodium aqueous solution to cause a reaction which produces sodium bicarbonate (NaHCO₃), and a particle size reactor in which the particle size of sodium bicarbonate is coarsened in a sodium bicarbonate-generating aqueous solution at 60-100°C.

## Description

### Technical Field

The present disclosure relates to a method for producing gypsum and sodium bicarbonate with controlled particle size using sodium sulfate and a related production apparatus, and more particularly, to a method for producing sodium bicarbonate and gypsum and a sodium bicarbonate producing apparatus including a process of controlling particle size during a process of producing sodium bicarbonate.

### Background Art

In general, flue gas desulfurization refers to the removal of sulfur (S) components from exhaust gases emitted by steel plants and power plants, particularly sulfur dioxide (SO₂). As industrialization has progressed, various factories, power plants, incinerators, etc. have emitted harmful gases such as sulfur oxides (SOₓ), which cause serious air pollution and induce respiratory diseases, asthma, lung cancer, etc. in humans. Currently used desulfurizers include sodium bicarbonate (NaHCO₃), activated carbon, calcium hydroxide (Ca(OH)₂), etc., among which sodium bicarbonate is known to exhibit excellent adsorption efficiency when sprayed into high-temperature flue gas due to its maximized specific surface area. In this case, a byproduct of sodium sulfate (Na₂SO₄) is produced during the desulfurization process.

As electric vehicles have recently been widely distributed, the demand for lithium as a raw material of secondary batteries has increased. The main byproducts generated during production of lithium are silica (SiO₂) and sodium sulfate (Na₂SO₄). It is expected that the amount of sodium sulfate byproduct will also increase in line with increasing demand for lithium in the future. Therefore, development of technology to recycle sodium sulfate should be essential to promote distribution of secondary batteries.

The currently generated byproduct is dissolved in water and then disposed of as wastewater or buried, causing a problem with the treatment cost and secondary environmental pollution. An efficient method for utilizing the byproduct sodium sulfate is to dissolve sodium sulfate in water and inject carbon dioxide and ammonia to reproduce sodium bicarbonate.

The technology underlying the present method is based on the Solvay process, which uses concentrated brine obtained by concentrating seawater to produce sodium carbonate and calcium chloride, wherein sodium bicarbonate is produced as a byproduct during the process. However, since the Solvay process does not include an operation for treating sulfate (SO₄²⁻), there is a need for developing a customized technology that can address this issue. The amount of produced sodium sulfate is expected to increase continuously in the future. Therefore, it is urgent to find ways to utilize or recycle byproducts such as sodium sulfate.

### Disclosure of Invention

### Technical Problem

An aspect of the present disclosure is to provide a method for producing sodium bicarbonate whose particle size is controlled using a sodium sulfate-containing material.

Another aspect of the present disclosure is to provide a method for producing gypsum using sodium bicarbonate with controlled particle size.

Another aspect of the present disclosure is to provide an apparatus for producing sodium bicarbonate with controlled particle size, using the method.

### Solution to Problem

According to an aspect of the present disclosure, there is provided a method for producing sodium bicarbonate including the steps of: producing a sodium sulfate solution containing sodium ions from a mixture of a leaching agent and a sodium sulfate-containing material; producing sodium bicarbonate (NaHCO₃) by adding carbon dioxide and ammonia into the sodium sulfate solution; and cooling the sodium bicarbonate at a temperature lower than that used in the step of producing the sodium bicarbonate to control particle size of the sodium bicarbonate.

According to another aspect of the present disclosure, a method for producing gypsum further comprises a step of producing gypsum by adding a calcium-containing material into the filtrate remaining after collecting the sodium bicarbonate in the step of producing the sodium bicarbonate.

According to another aspect of the present disclosure, there is provided a reactor for producing sodium bicarbonate, comprising a leaching reactor in which a sodium aqueous solution is produced by leaching sodium ions from a sodium sulfate-containing material by using a leaching agent; a carbonation reactor in which a gas containing carbon dioxide or a carbonation solution and a gas containing ammonia or an ammonia solution are supplied to the sodium aqueous solution to cause a reaction which produces sodium bicarbonate (NaHCO₃); and a particle size reactor in which the particle size of sodium bicarbonate is coarsened in a sodium bicarbonate-generating aqueous solution at 35-100°C.

### Advantageous Effects of Invention

According to an aspect of the present disclosure, sodium bicarbonate with controlled particle size may be produced by using sodium sulfate-containing minerals, sodium sulfate byproducts, and sodium sulfate-containing materials as desulfurization waste fluid from steel plants or power plants, and, by producing gypsum using the waste solution, disposal costs of waste generated after desulfurization can be reduced, and carbon dioxide can be stably fixed as carbonate, thereby contributing to carbon neutrality as a CCU technology for carbon dioxide utilization.

### Brief Description of Drawings

FIG. 1 is a schematical view of an exemplary process flow diagram of the present disclosure.
FIG. 2 is the carbonation reaction temperature versus sodium bicarbonate yield (graph corresponding to the right-hand Y-axis) and purity (graph corresponding to the left-hand Y-axis).
FIG. 3 is a graph showing the ammonia recovery rate (%) according to the amount of CaO (mL) added per 100 mL of wastewater after carbonation.
FIG. 4 is a graph showing the ratio of the weight of recovered gypsum to the weight of sodium sulfate, that is the gypsum yield, according to the amount (mL) of quicklime (Calcium oxide, CaO) added per 100 mL of wastewater after carbonation.
FIG. 5 is a graph showing the particle size (µm) of the produced sodium bicarbonate according to reactor temperature.
FIG. 6 is schematical view of an exemplary reactor for producing sodium bicarbonate according to the present disclosure.

### Best Mode for the Invention

Hereinafter, a preferred embodiment of the present disclosure will be described with reference to the accompanying drawings. However, it should be noted that the embodiments of the present disclosure may be modified in various other forms and are not limited to the following description.

The present disclosure relates to a method for producing sodium bicarbonate (NaHCO₃) with controlled particle size and further to a method for producing gypsum (CaSO₄) using the same, and an object of the present disclosure is to provide a method for producing sodium bicarbonate and gypsum, and a related apparatus by recovering sodium (Na) from a sodium a low-purity sulfate-containing material such as sodium sulfate-containing waste or natural minerals to produce sodium bicarbonate and by producing high-purity gypsum from SO4²⁻ waste fluid, thereby reducing the landfill costs of waste generated after desulfurization and stably fixing carbon dioxide as carbonates.

The method of producing sodium bicarbonate according to the present disclosure includes steps of: producing a sodium sulfate solution containing sodium ions from a mixture of a leaching agent and a sodium sulfate-containing material; producing sodium bicarbonate (NaHCO₃) by adding carbon dioxide and ammonia into the sodium sulfate solution; and cooling the sodium bicarbonate at a temperature lower than that used in the step of producing the sodium bicarbonate to control particle size of the sodium bicarbonate.

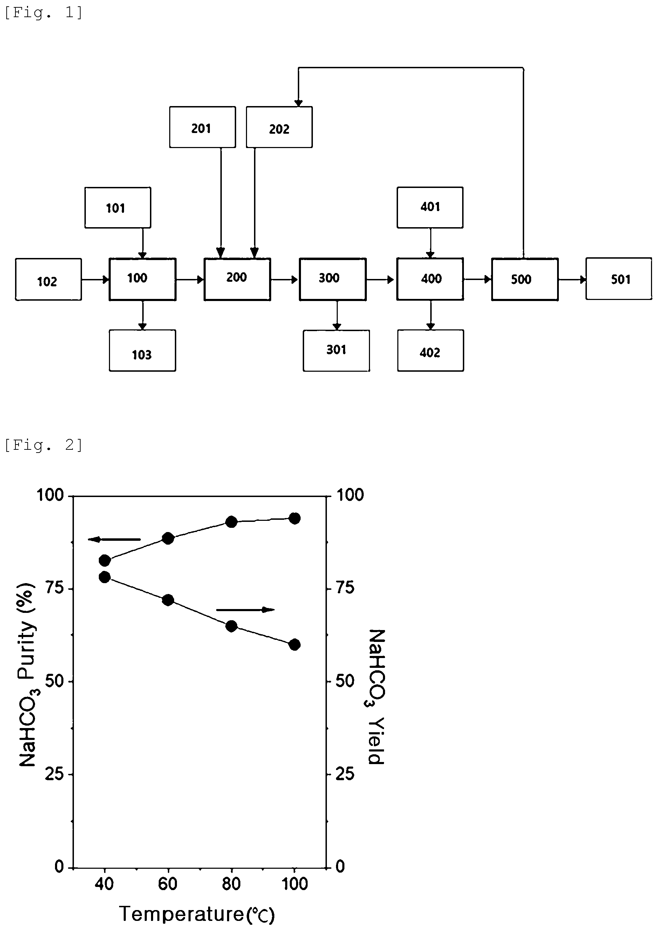

FIG. 1 is a schematical view of an exemplary process flow diagram of the present disclosure, wherein the aforementioned reactions may be performed through a leaching reactor 100, a carbonation reactor 200, and a particle size reactor 300.

More specifically, the step of producing a sodium sulfate solution containing sodium ions from a mixture of the leaching agent 101 and the sodium sulfate-containing material, for example, the sodium sulfate-containing waste 102, may be carried out by performing a step of separating solid-liquid to produce and recover the sodium sulfate solution containing sodium ions from the mixture of the leaching agent and the sodium sulfate-containing material and discharge waste 103. Such a reaction may be carried out in the leaching reactor 100.

The step of producing the sodium sulfate solution containing sodium ions is a step of producing and recovering a sodium sulfate solution from a sodium sulfate-containing material by means of a leaching agent. The method may further include a stirring step of mixing the sodium sulfate-containing material with the leaching agent prior to the step of producing the sodium sulfate solution containing sodium ions. Since the leaching agent contains little or no sodium ions, it can easily produce a sodium sulfate solution from the sodium sulfate-containing material.

The sodium sulfate-containing material may be a sodium sulfate-containing waste or a natural mineral such as sodium sulfate. For example, the sodium sulfate-containing waste may be produced by desulfurizing flue gas including sulfur oxides (SOₓ) components in sodium bicarbonate and then drying the resulting product, or it may be a byproduct generated from a lithium producing plant. For example, it may be produced by using sodium bicarbonate to desulfurize flue gas generated by combustion of fuel in power plants, factories, incinerators, etc., or electric dust collection treated flue gas produced in steel making processes. The sodium sulfate-containing waste includes impurities such as K, Ca, Fe, and Cl other than sodium sulfate, so that solid impurities are removed in the step of separating solid-liquid after stirring is completed.

The solubility of sodium sulfate at room temperature is 28.1 g/100 mL and shows a rapid change in solubility as the temperature increases within a range from 5°C to 45°C, so that it is appropriate for the dissolution temperature of the desulfurization waste to be between 20 and 60°C.

The leaching agent is not particularly limited as long as it can be a substance capable of leaching sodium sulfate ions upon contact with the sodium sulfate-containing material, and may include one or more selected from water and aqueous ammonia solution.

The step of introducing carbon dioxide such as a carbon dioxide-containing gas 201 and ammonia-containing gas and/or ammonia solution 202 into the sodium sulfate solution to produce sodium bicarbonate (NaHCO₃) may be performed by including a step of ammonification for introducing ammonia into the sodium sulfate solution and a step of carbonation for introducing carbon dioxide, wherein the carbonation step may be carried out in a carbonation reactor 200.

The sodium sulfate solution may react with carbon dioxide and ammonia to produce a solid phase of sodium bicarbonate through the following reaction equation (1).

Na₂SO₄ + 2CO₂ + 2NH₃ + 2H₂O → 2NaHCO₃ + (NH₄)₂SO₄ Equation (1)

As shown in Equation 1, the Gibbs' free energy of a reaction for producing calcium carbonate is -851.0 kJ/mol, which is negative, indicating that the reaction may occur spontaneously. In addition, since this reaction is exothermic, there is an advantage that additional energy consumption during the sodium bicarbonate producing process is not large.

The carbonation reactor where carbonation reaction occurs, may have a reaction pressure of 1 atm to 10 atm and a reaction temperature of 120°C or less, or 80°C or less. For example, the step of producing sodium bicarbonate (NaHCO₃) by heating a sodium sulfate solution in the carbonation reactor to 40°C to 120°C and adding carbon dioxide and ammonia into the sodium sulfate solution may be carried out. When the pressure of the carbonation reactor exceeds 10 atm, sufficient amount of carbon dioxide can be dissolved therein, but energy required for the carbonation reactor is high, thereby reducing economic efficiency of the final products, which are sodium bicarbonate and gypsum. The time taken for the carbonation depends on the method of injecting carbon dioxide.

Meanwhile, when the temperature of the carbonation reactor is less than 40°C, purity may be insufficient and when it exceeds 120°C, yield tends to decrease.

When carbon dioxide is injected in the form of a gas, it may be possible to perform the reaction within four hours or less depending on whether aeration is performed. However, an optimized pressure and reaction time may vary according to the size/space/condition of the reactor.

The chemical formula of sodium bicarbonate is NaHCO₃ and the amount of sodium bicarbonate increases as the concentration of bicarbonate ions (HCO₃⁻) in the solution increases. The concentration of bicarbonate ions in an aqueous carbonate system containing carbon dioxide is highest when the pH is between 7.5 and 9.0. Therefore, it is preferable to maintain the pH of the sodium sulfate solution at 7.5-9.0 to increase the recovery rate of sodium bicarbonate. However, if a sufficient amount of carbon dioxide is dissolved in the sodium sulfate solution to produce sodium bicarbonate, the pH may be less than 7.5. In this case, bicarbonate ions (HCO₃⁻) are converted into carbonic acid (H₂CO₃), which reduces the production rate of sodium bicarbonate. Therefore, it is preferable to first add ammonia to dissolve the ammonia before adding carbon dioxide to the sodium sulfate solution.

The carbon dioxide may be one or more selected from the group consisting of pure carbon dioxide, FINEX off gas (FOG), FINEX tail gas (FTG), Blast furnace gas (BFG), electric arc furnace gas, coal power plant exhaust gas, gas turbine exhaust gas, incinerator exhaust gas, glass melting exhaust gas, heat-generating facility exhaust gas, petroleum chemical process exhaust gas, petroleum chemical process process gas, precombustion exhaust gas and a gasifier exhaust gas. In addition, the carbon dioxide may be concentrated by at least one method selected from the group consisting of wet amine absorption, PSA process and membrane separation process.

Meanwhile, the mass ratio of sodium sulfate-containing material and water as a leaching agent may be controlled to control recovery rate of sodium bicarbonate. That is, in order for the recovery rate of sodium bicarbonate to be at least 50% (based on Na⁺ mole), the mass ratio of sodium sulfate-containing material and water may be 1:1.5 to 1:5, preferably 1:1.75 to 1:3.0. When the amount of water is less than the above range, there are disadvantages that desulfurization waste is not dissolved so that much residue is generated and thus sodium recovery rate decreases, and, when the amount of water exceeds the above range, sodium recovery rate increases whereas the cost for treating wastewater in subsequent processes increases. In this case, it is possible to recover at least 80% of sodium contained in desulfurization waste, and after separation and drying, the amount of undissolved desulfurization waste is less than 10% compared to initial input amount, and the amount of undissolved desulfurization waste decreases as the amount of water increases.

Meanwhile, in order to recover the sodium bicarbonate at a concentration of 50 mol % based on Na⁺ mole, it is preferable that the mole ratio of ammonia (NH₃) to sodium (Na⁺) in the waste solution be 0.8 to 1.3. When the mole ratio of ammonia (NH₃) / sodium (Na⁺) is less than 0.8, the recovery rate of the sodium bicarbonate recovered in the step of separating the second solid-liquid (S5) becomes less than 50 mol %, and, when the mole ratio exceeds 1.3, although the recovery rate of the sodium bicarbonate increases, the purity of the sodium bicarbonate may decrease.

The present disclosure includes a step of producing sodium bicarbonate (NaHCO₃) by heating the sodium sulfate solution to a temperature of 40°C to about 120°C and adding carbon dioxide and ammonia into the sodium sulfate solution, followed by a step of cooling the sodium bicarbonate at a temperature lower than that used in the step of producing the sodium bicarbonate to control particle size of the sodium bicarbonate.

The step of controlling the particle size of the sodium bicarbonate may be performed in a particle size reactor 300, and the temperature of the particle size reactor 300 may be lower than the temperature in the step of producing the sodium bicarbonate (NaHCO₃) by 5°C to 40°C, for example, lower by 10°C to 30°C. When the temperature difference is less than 5°C, the particle size of the sodium bicarbonate may not be properly controlled whereas when the temperature difference exceeds 40°C, control of the particle size distribution may fail.

Meanwhile, the temperature of the step for controlling the particle size of the sodium bicarbonate may be in a range from 35°C to 100°C, and for example, it may be in a range from 50°C to 80°C.

For example, the produced sodium bicarbonate may be introduced into a particle size reactor, for example a rotary circulating reactor, to control temperature and then produce a sodium bicarbonate 301 having an increased particle size. The step of controlling the particle size of the sodium bicarbonate may include controlling the particle size of the sodium bicarbonate to 40 µm to 250 µm, preferably 50 µm to 200 µm. When the particle size of the sodium bicarbonate is less than 40 µm, it is difficult to handle due to dispersion and there are problems in that it is difficult to control the amount of the sodium bicarbonate used as raw material in the process using the sodium bicarbonate.

In this case, the cooling rate is preferably performed at 2°C to 20°C/hour, and when the cooling rate is less than the above range, the particle size may not be smoothly controlled due to slow cooling speed, and when the cooling rate exceeds the above range, crystal growth occurs rapidly, resulting in a problem of controlling particle size distribution. Meanwhile, when the temperature may be lowered at a sufficient temperature reduction rate in the carbonation reactor, the particle size reduction reactor may be omitted.

In the step of introducing carbon dioxide and ammonia into the sodium sulfate solution to produce sodium bicarbonate (NaHCO₃), when the sodium sulfate-containing material separated from the process for producing sodium bicarbonate is used, in which the material contains impurities, purity of sodium bicarbonate may be lower than that produced by using pure sodium sulfate, so it is possible to additionally perform a washing step of washing the sodium bicarbonate to increase the purity of the sodium bicarbonate. As the amount of water washing increases in the step of washing the sodium bicarbonate, the purity of the produced sodium bicarbonate may be improved.

In this case, the water washing may be performed with 0.5 to 4 parts by weight of water per 1 part by weight of sodium bicarbonate, and when the amount of water is less than the above range, improvement in purity may be insufficient, and when it exceeds the above range, recovery rate of sodium bicarbonate may decrease.

Further, the washed sodium bicarbonate may further include a step of drying the sodium bicarbonate. If the step of drying the sodium bicarbonate is carried out at a temperature of more than 50°C, the sodium bicarbonate tends to decompose back to sodium carbonate, so drying of the sodium bicarbonate is preferably carried out at 50°C or less.

However, when the final target product is sodium carbonate rather than sodium bicarbonate, the produced sodium bicarbonate may be dried at a temperature of 50°C or higher to obtain sodium carbonate. In addition, the solution used for washing to improve the purity of sodium bicarbonate may be recycled as a leaching agent.

According to another aspect of the present disclosure, there is provided a method for producing gypsum further including a step of producing the gypsum 402 by recovering sodium bicarbonate in the step of producing sodium bicarbonate and adding calcium-containing material 401 to the remaining filtrate, wherein this step may be performed in a gypsum reactor 400. More particularly, since the filtrate after carbonation reaction contains a large amount of sulfate ions (SO₄²⁻), calcium-containing material can be added to the filtrate to produce gypsum from the sulfate ion contained therein.

The calcium-containing material may be one or more selected from the group consisting of waste cement, waste concrete, coal ash, fly ash, steel slag, quicklime (CaO), calcium chloride (CaCl₂), wollastonite, limestone, olivine, serpentine, asbestos and dewatered lime.

When a calcium-containing material is added to the filtrate optimized for pH of between 7.5 and 9.0 to produce the sodium bicarbonate, the pH of the filtrate rises above 9. If the pH of the filtrate exceeds 9, residual carbon dioxide in the solution exists as carbonate ions (CO₃²⁻), so that the introduced calcium ions (Ca²⁺) react with the carbonate ions to form calcium carbonate (CaCO₃). In addition, carbon dioxide remaining in the solution at a high pH forms slaked lime (Ca(OH)₂) by a hydroxyl group (OH⁻) in water.

Further, the present disclosure may further comprise a step of recovering ammonia in which, in an apparatus additionally equipped with an ammonia recovery reactor 500, the gypsum is recovered in the step of producing the gypsum, and the remaining filtrate is heated to produce ammonia and the filtrate 501 is discharged. In more detail, since the wastewater after carbonation contains a large amount of ammonia, it is preferable to recover it, and in order to secure an ammonia recovery rate of 50% or more, the temperature and pH of the reactor should be 60°C and pH 8.0 or higher, respectively.

That is, the pH of the step of recovering ammonia may be preferably maintained at 8.0 or higher. When the pH of the step of recovering ammonia is less than 8.0, there is a problem in that the ammonia recovery rate decreases. In addition, the step of recovering ammonia heats the remaining filtrate, and when the temperature of the heated filtrate is less than 60°C, there is a problem in that the ammonia recovery rate decreases. For example, the temperature of the step of recovering ammonia may be 60°C to 100°C

The quicklime slurry prepared to increase the pH of the waste solution may be introduced and it is possible to add not only a slurry form but also powder. When adding the quicklime slurry, ammonia gas is generated even by simple stirring in the heated waste solution. However, in order to reduce recovery rate and time of ammonia, a method for spraying a solution may be applied. The thus-generated ammonia gas may be directly injected into the carbonation reactor or dissolved again in water to create an aqueous ammonia solution which is then injected into the carbonation reactor.

In this case, the molar ratio of calcium ions and sulfate ions (Ca²⁺ : SO₄²⁻), is preferably in a range from 1 : 1.0 to 1 : 1.3, wherein when the ratio of sulfate ions exceeds 1.3, the purity of gypsum decreases, and when the ratio of sulfate ions is less than 1.0, the pH of the filtrate becomes too low so that ammonia cannot be sufficiently recovered during an step of stripping ammonia.

The calcium-containing material and water react to generate heat. Therefore, by further including a heat exchanger between the sodium bicarbonate reactor and the ammonia recovery equipment, heat may be supplied to the ammonia recovery equipment, thereby reducing additional energy consumption and saving energy in the step of recovering ammonia.

The recovered ammonia may be reused in the form of a gas or re-produced into an aqueous ammonia solution for reuse.

The calcium-containing material may be one or more selected from the group consisting of waste cement, waste concrete, coal ash, fly ash, steel slag, quicklime (CaO), calcium chloride (CaCl₂), wollastonite, limestone, olivine, serpentine, asbestos and dewatered lime.

In this case, the quicklime (CaO) may be added in a volume of 10 mL to 50 mL per 100 mL of wastewater generated after carbonation.

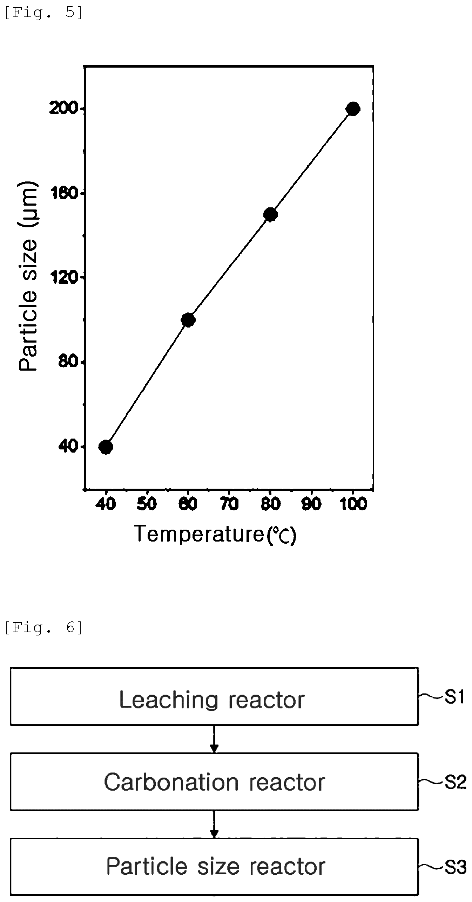

According to another aspect of the present disclosure, an apparatus that can be used to produce sodium bicarbonate and gypsum in accordance with the present disclosure as described above, is provided. FIG. 6 is a schematical view of an exemplary reactor for producing sodium bicarbonate according to the present disclosure.

More particularly, the present disclosure provides a reactor (S1) for producing sodium bicarbonate, comprising a leaching reactor in which a sodium aqueous solution is produced by leaching sodium ions from a sodium sulfate-containing material by using a leaching agent; a carbonation reactor (S2) in which a gas containing carbon dioxide or a carbonation solution and a gas containing ammonia or an ammonia solution are supplied to the sodium aqueous solution to cause a reaction which produces sodium bicarbonate (NaHCO₃); and a particle size reactor (S3) in which the particle size of sodium bicarbonate is coarsened in a sodium bicarbonate-generating aqueous solution at 35-100°C, for example 40°C to 80°C, to increase the particle size of sodium bicarbonate.

In the leaching reactor, an step of producing a sodium sulfate solution containing sodium ions from a mixture of a leaching agent and a sodium sulfate-containing material is performed, and in the carbonation reactor, a carbon dioxide-containing gas or a carbonated solution and an ammonia-containing gas or an ammonia solution are supplied to an aqueous solution containing sodium ion to produce sodium bicarbonate (NaHCO₃) by reaction, and in the particle size reactor, a step of controlling the particle size of sodium bicarbonate by cooling at a temperature of 35°C to 100°C is performed, and in this case, the sodium bicarbonate-generating aqueous solution may be introduced into a particle size reactor, for example, a circulating reactor, and maintained at 35°C to 100°C, for example 40°C to 80°C, for 2 to 10 hours to increase the particle size of the sodium bicarbonate.

Further, the reactor for producing sodium bicarbonate of the present disclosure may further include an ammonia recovery reactor in which a calcium-containing material is supplied to the filtrate remaining after recovery of sodium bicarbonate to produce gaseous ammonia; and an evaporation concentration reactor in which the filtrate from the ammonia recovery reactor is supplied thereto and evaporated and concentrated to produce gypsum.

In this case, each reaction occurring in each reactor is as described above.

Hereinafter, the present disclosure will be described in more detail with reference to specific examples. The following examples are merely illustrative of the present disclosure and do not limit the scope thereof.

### Mode for the Invention

### Examples

### Example 1 : Manufacture of sodium bicarbonate

100 g of desulfurization waste containing sodium sulfate (Na₂SO₄) as desulfurization byproduct and 175 mL of water were added and stirred at 40°C for 1 hour at a stirring speed of 500 rpm. The mixture after being stirred was subjected to separate solid-liquid by filtration to recover a sodium leachate.

Then, to synthesize the sodium bicarbonate, 75 mL of sodium leachate and 25 mL of 25 wt% aqueous ammonia solution were injected into a 300 mL high pressure reactor. The temperature was maintained at 25°C, and carbon dioxide gas was injected at 7 bar. In this case, the stirring speed was set to 200 rpm, and the reaction time was 8 hours.

When the reaction is completed, sodium bicarbonate is produced as a white solid precipitate is generated and subjected to separation of solids from liquids by filtration. The obtained sodium bicarbonate was dried at room temperature. When the sodium bicarbonate is heated to a temperature higher than 50°C during carbonation, it decomposes into sodium carbonate, thereby increasing purity but decreasing yield.

If necessary, a water washing process may be performed to improve the purity of the sodium bicarbonate. Meanwhile, FIG. 2 is a graph showing the yield and purity of the sodium bicarbonate according to temperature. More particularly, the reaction was carried out at temperatures of 40°C, 60°C, 80°C, and 100°C for 60 minutes under an atmosphere of CO₂ at a pressure of 7 bar. The purity of the sodium bicarbonate was confirmed by X-ray diffraction analysis (XRD) and elemental analysis.

The reaction results of 100 g of the desulfurization waste are summarized in Table 1 below.

**[Table 1]**

| | |
|---|---|
| Weight of desulfurization waste after leaching | 10g |
| Amount of carbon dioxide used | 65g |
| Amount of aqueous ammonia solution (25 wt%) used | 13g |
| Weight of sodium bicarbonate | 83g |
| Purity of sodium bicarbonate | > 88% |
| Weight of waste fluid after sodium bicarbonate synthesis | 242g |
| Volume of waste fluid after sodium bicarbonate synthesis | 146mL |

### Example 2: Manufacture of gypsum.

To determine the ammonia recovery rate in an ammonia recovery reactor after production of gypsum, 100 mL of waste solution after carbonization was added to the reactor and heated at a temperature of 80°C, followed by addition of 7 M CaO slurry. Then, aeration with nitrogen was performed.

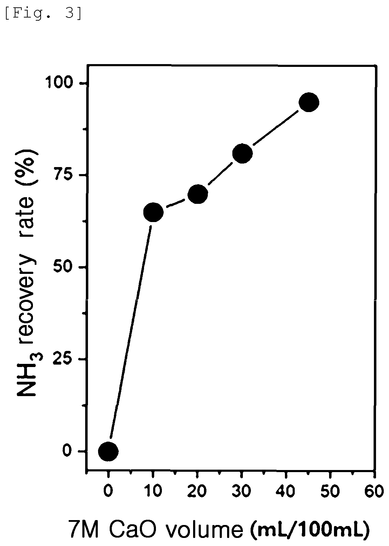

Further, the gypsum was recovered, and the remaining filtrate was evaporated in a heater to recover ammonia, and the ammonia recovery rate was confirmed by IC, the results of which are shown in FIG. 3.

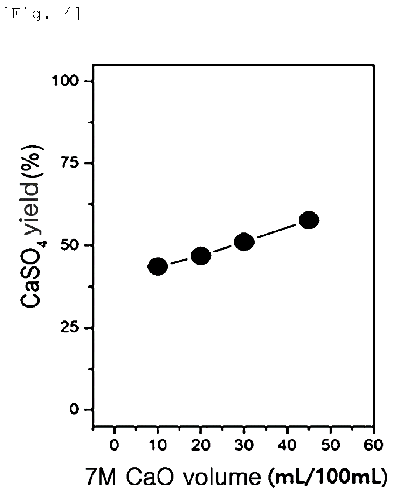

Meanwhile, after recovering gypsum and evaporating and concentrating the remaining filtrate, the amount of gypsum produced according to the amount of CaO input during ammonia recovery was measured. In this case, concentration was carried out at 80°C by adding a waste solution after stripping ammonia into a reactor. The final solid mass was measured, and the results are shown in FIG. 4 as the yield of gypsum (CaSO₄).

In the graphs of FIGS. 3 and 4, the x-axis represents the volume of 7 M quicklime (CaO) per 100 ml of filtrate (waste fluid) generated after carbonation.

Experimental Example 1: Particle size of the sodium bicarbonate according to the reaction temperature.

In order to improve the particle size in Example 1, the temperature of the carbonation reactor was heated from 40°C to 100°C. The sodium bicarbonate solution reacted from the carbonation reactor was transferred to a particle size reactor for precipitation. The particle size reactor is a circulating type reactor and the temperature of the solution introduced into the particle size reactor from the carbonation reactor was controlled at 60°C to 100°C. In the circulating reactor, a cooling process was carried out for precipitation of sodium bicarbonate crystals and particle size growth, and the temperature of the circulating a sodium bicarbonate solution was controlled by cooling to 40°C to 70°C, which is lower than the temperature used for producing the sodium bicarbonate in the carbonation reaction.

More specifically, the carbonation reactor temperature was set to each of 40°C, 60°C, 80°C, and 100°C, and the sodium bicarbonate solution was circulated for 60 minutes at each temperature, cooled down to 40°C in a circulating reactor, and then measured for sodium bicarbonate particle size. The particle size reactor is composed of a cooling reactor and a room temperature reactor, and the sodium bicarbonate solution is introduced into the room temperature reactor and then circulated to the cooling reactor.

While examples have been shown and described above, it will be apparent to those skilled in the art that modifications and variations could be made without departing from the scope of the present disclosure as defined by the appended claims.

### Description of Reference Characters

100: Leaching Reactor
101: Leaching Agent 102: Sodium Sulfate Waste 103: Waste
200: Carbonation Reactor
201: Carbon Dioxide-Containing Gas 202: Ammonia Gas or Ammonia Solution
300: Particle Size Reactor
301: Sodium Bicarbonate
400: Gypsum Reactor.
401: Calcium-Containing Material 402 : Gypsum
500: Ammonia Recovery Reactor
501: Filtrate

## Claims

1. A method for producing sodium bicarbonate comprising the steps of:
producing a sodium sulfate solution containing sodium ions from a mixture of a leaching agent and a sodium sulfate-containing material;
producing sodium bicarbonate (NaHCO₃) by heating the solution of sodium sulfate to between 40°C and 120°C and adding carbon dioxide and ammonia into the sodium sulfate solution; and
cooling the sodium bicarbonate at a temperature lower than that used in the step of producing sodium bicarbonate to control particle size of the sodium bicarbonate.

2. The method for producing sodium bicarbonate of claim 1, wherein the step of controlling the particle size of the sodium bicarbonate is performed at a temperature of 5°C to 40°C lower than that used in the step of producing sodium bicarbonate (NaHCO₃).

3. The method for producing sodium bicarbonate of claim 1, wherein the step of controlling particle size of the sodium bicarbonate is performed at a temperature of 35°C to 75°C.

4. The method for producing sodium bicarbonate of claim 1, wherein the sodium sulfate solution has a pH in a range of 7.5 to 9.0.

5. The method for producing sodium bicarbonate of claim 1, wherein the particle size of the sodium bicarbonate is controlled to 40 µm to 250 µm in the step of controlling the particle size of the sodium bicarbonate.

6. The method for producing sodium bicarbonate of claim 1, further comprising a step of washing the sodium bicarbonate with water using 0.5 to 4 parts by weight of water per 1 part by weight of sodium bicarbonate.

7. The method for producing gypsum of claim 1, further comprising a step of producing gypsum by adding a calcium-containing material into the filtrate remaining after collecting the sodium bicarbonate in the step of producing the sodium bicarbonate.

8. The method for producing gypsum of claim 7, wherein the filtrate remaining after recovery of the sodium bicarbonate in the step of producing the sodium bicarbonate has a pH of 7.5 to 9.0.

9. The method for producing gypsum of claim 7, further comprising a step of recovering ammonia in which, the filtrate remaining after recovering gypsum in the step of producing gypsum is heated to 60°C or higher to generate ammonia.

10. The method for producing gypsum of claim 7 wherein the calcium-containing material is quicklime (CaO).

11. The method for producing gypsum of claim 10, wherein the quicklime (CaO) is added in a volume of 10 mL to 50 mL per 100 mL of wastewater generated after carbonation.

12. A reactor for producing sodium bicarbonate, comprising:
a leaching reactor in which a sodium aqueous solution is produced by leaching sodium ions from a sodium sulfate-containing material by using a leaching agent;
a carbonation reactor in which a gas containing carbon dioxide or a carbonation solution and a gas containing ammonia or an ammonia solution are supplied to the sodium aqueous solution to cause a reaction which produces sodium bicarbonate (NaHCO₃); and
a particle size reactor in which the particle size of sodium bicarbonate is coarsened in a sodium bicarbonate-generating aqueous solution at 35-100°C.

13. The reactor for producing sodium bicarbonate of claim 12, further comprising an ammonia recovery reactor in which a calcium-containing material is supplied to the filtrate remaining after recovery of sodium bicarbonate to generate gaseous ammonia.

14. The reactor for producing sodium bicarbonate of claim 13, further comprising an evaporation concentration reactor to which the ammonia recovery reactor filtrate is fed and in which gypsum is produced by evaporative concentration.
